# EUROPÄISCHE PATENTSCHRIFT

(11) **EP 2 512 877 B1**
(45) Veröffentlichungstag und Bekanntmachung des Hinweises auf die Patenterteilung: **21.02.2018**
(21) Anmeldenummer: 10795300.2
(22) Anmeldetag: 14.12.2010
(51) Int. Cl.: B60R 25/10, G08B 25/01, H04W 72/04

(54) **NOTRUFEMPFANGSEINHEIT FÜR EINSATZKRÄFTE**
EMERGENCY CALL RECEIVER UNIT FOR ACTION FORCE
UNITÉ DE RÉCEPTEUR D'APPEL D'URGENCE POUR LA FORCE D'INTERVENTION RAPIDE

(30) Priorität: 14.12.2009 DE 102009058074
(43) Veröffentlichungstag der Anmeldung: 24.10.2012
(73) Patentinhaber: Continental Automotive GmbH, 30165 Hannover (DE)
(72) Erfinder: STÄHLIN, Ulrich, 65760 Eschborn (DE)
(86) Internationale Anmeldenummer: PCT/EP2010/069588
(87) Internationale Veröffentlichungsnummer: WO 2011/082985

(56) Entgegenhaltungen:
- DE-A1-102009 015 513
- DE-T1- 19 882 330
- DE-T2- 60 026 315
- RUBINSTEIN M G ET AL: "Measuring the capacity of in-car to in-car vehicular networks", IEEE COMMUNICATIONS MAGAZINE, IEEE SERVICE CENTER, PISCATAWAY, US, Bd. 47, Nr. 11, 1. November 2009 (2009-11-01), Seiten 128-136, XP011284164, ISSN: 0163-6804, DOI: DOI:10.1109/MCOM.2009.5307476

## Beschreibung

Die Erfindung betrifft eine Notrufempfangseinheit für Einsatzkräfte.

Moderne Fahrzeuge sind häufig mit schlüssellosen Zugangssystemen bzw. Funkschlüsseln, dem sog. Remote Keyless Entry (RKE) ausgestattet. Diese Funkschlüssel steuern das Ver- und Entriegeln von Türen und Kofferraum eines Kraftfahrzeuges per Funksteuerung. Auf diese Weise können die Fahrzeugtürschlösser eines Kraftfahrzeuges drahtlos geöffnet bzw. geschlossen werden. Weitere Funktionen können über einen Funkschlüssel aktiviert bzw. deaktiviert werden, wie beispielsweise die Wegfahrsperre.

Ein Funkschlüsselsystem umfasst einen fahrzeugseitigen Empfänger bzw. ein Fahrzeugmodul und einen oder mehrere mobile Sender, die beispielsweise in der Hand gehalten werden können. Der Sender bzw. das tragbare Modul kann dabei mit einem oder mehreren manuell bedienbaren Schaltern versehen sein. Weiterhin gibt es Funkschlüssel neuerer Generationen, bei denen der Funkschlüssel nicht mehr in die Hand genommen wird, sondern der fahrzeugseitige Sender die Nähe des Schlüssels zum Fahrzeug registriert und beispielsweise durch eine Berührung des Türgriffes durch den Fahrer das Türschloss entriegelt. Der Verzicht von manuellen Eingaben über den Funkschlüsselsender wird möglich durch den Einsatz der sogenannten bidirektionalen Kommunikation. Anders als bei einer herkömmlichen Funkschlüssel-Zentralverriegelung werden vom dem Funkschlüsselsender nicht nur Signale an das Schließsystem gesendet, sondern auch Informationen von dem Schließsystem empfangen. Dabei ist der Funkschlüsselsender als Transceiver ausgeführt. Mit dem sogenannten Passive Start and Entry (PASE) entriegeln die Türen allein durch Berührung des Türgriffs und der Motor kann auf Knopfdruck ohne Schlüssel gestartet werden. Dabei besitzt der fahrzeugseitige Transceiver einen Speicher, der einen Identifikationscode speichert, der den Funkschlüsselsender identifizieren kann.

Der Austausch von Informationen mit verschiedenen Fahrzeugen, die am verkehr teilnehmen, und zwischen Fahrzeug und Infrastruktur kann in Zukunft zur Erhöhung der Sicherheit der Verkehrsteilnehmer sowie des Komforts der Fahrzeugführer beitragen. Diese Kommunikation von Fahrzeug zu Fahrzeug bzw. von Fahrzeug zur Infrastruktur, die im Folgenden Fahrzeug-zu-X Kommunikation (C2X Kommunikation) genannt wird, kann nur genutzt werden, wenn eine gewisser Anteil der beteiligten Fahrzeuge oder Infrastruktureinheiten mit entsprechenden Kommunikationseinheiten ausgerüstet ist, die auf derselben Technologie beruhen. Vor allem bei der sich schnell wandelnden Kommunikationstechnologie und abhängig von den Preisvorstellungen der Fahrzeugführer kann der für die Aufrüstung der Fahrzeuge verbundene zusätzliche Aufwand für die Bereitstellung und Installation solch einer Kommunikationseinheit zu hoch sein. Daher werden einfache und kostengünstige Lösungsmöglichkeiten gebraucht, die vielen Fahrzeughaltern die Fahrzeug-zu-X-Kommunikation zur Verfügung stellen können, wie aus dem Dokument DE 102009015513A1 bekannt. Weiterhin ist es bekannt, dass Notfallfahrzeuge wie beispielsweise Feuerwehrwägen, Krankenwägen oder Ähnliches auf eine gut funktionierende Kommunikation im Falle eines Einsatzes angewiesen sind. Hier sind Kommunikationstechniken für Fahrzeug-zu-Fahrzeug oder Fahrzeug-zu-Einsatzleitung notwendig, um Nachrichten an andere Einsatzkräfte aussenden zu können und den Rettungseinsatz schnell koordinieren zu können. Geht ein Notruf beispielsweise über Telefonanruf ohne genaue Positionsangabe bei einer Rettungsleitstelle ein, so sendet diese Einsatzkräfte aus. Häufig ist die Positionsangabe der Anrufenden nicht genau genug und die Rettungskräfte müssen vor Ort die Verunfallten bzw. ein zu suchendes Objekt erst finden. Dafür können den Suchtrupps beispielsweise Sendeausrüstungen wie Sprechfunk zur Verfügung stehen. Jedoch ist die Abstimmung per Sprechfunk in der Praxis zum Teil ungenau oder funktioniert nicht bzw. nicht gut genug. Daher ist ein Bedarf an einer Fahrzeug-zu-Fahrzeug-Kommunikation bei Noteinsätzen gegeben, die zuverlässig funktioniert.

Nach einem Crash fällt es den Rettungskräften teilweise schwer, das verunfallte Fahrzeug zu finden. Wurde es dann gefunden, so ist es bei modernen Fahrzeugen schwierig herauszufinden, wo Rettungsscheren angesetzt werden können, sei es wegen Airbags, hochfesten Stählen und welche Antriebstechnik und damit Betriebsstoffe zu beachten sind.

Bekannt ist, wie Fahrzeugfunktionen über Rettungskräfte ausgelöst werden und sich Suchtrupps koordinieren können. Des Weiteren ist ein Ortungssignal für Einsatzkräfte bekannt.

Es ist eine Aufgabe der Erfindung, die Beschleunigung eines Rettungseinsatzes für einen Fahrer eines verunfallten Fahrzeugs zu ermöglichen und den Einsatzkräften eine beschleunigte Rettung durchzuführen.

Gelöst wird die Aufgabe mit den Merkmalen der unabhängigen Ansprüche 1 und 14. In den abhängigen Ansprüchen werden vorteilhafte Ausgestaltungen angegeben.

Die beschriebenen Ausführungsbeispiele betreffen gleichermaßen die Notrufempfangseinheit, das Fahrzeug, das Verfahren, das Programmelement und das computerlesbare Medium. Es versteht sich, dass z. B. die im Folgenden im Hinblick auf die Notrufempfangseinheit genannten Merkmale auch als Verfahrensschritte, Programmbausteine für das Programmelement oder in dem computerlesbaren Medium implementieren werden können, und umgekehrt.

In einer ersten vorteilhaften Ausführungsform weist die Notrufempfangseinheit für ein Fahrzeug eine Detektionseinheit zur Detektion eines verunfallten Fahrzeuges, das ein Triggerereigniss generiert; eine Steuereinheit zum Erzeugen eines Ortungssignals, eine Sendeeinheit zum mehrmaligen Übermitteln des Ortungssignals an einen Empfänger und das mehrmalige Übermitteln des Ortungssignals von dem Triggerereignis getriggert wird und das Ortungssignal ein Auffinden des Fahrzeugs ermöglicht, wobei abhängig von der Empfangsfeldstärke des Ortungssignals mit dem Auffinden mindestens eines verunfallten Fahrzeuges eine Nummer des Rettungsleitfadens des jeweiligen verunfallten Fahrzeuges und ein RSSI für das Rettungssignal empfangen werden.

Auf diese Weise können Car-to-X-Anwendungen über den Funkschlüssel verfügbar gemacht werden. Da eine Funkschlüsseltechnik bereits bei vielen Fahrzeugen implementiert ist, kann die Kommunikation von Funkschlüssel zu Fahrzeug-zu-X sehr einfach und schnell eingeführt werden. Damit kann auch das Entwicklungsrisiko reduziert werden. Die Position eines Fahrzeuges kann beispielsweise in Kombination mit Zeitstempel und Identifikationsnummern über den Funkschlüssel von den Fahrzeugen zyklisch ausgesendet werden. Auf dieser Basis können die anderen Fahrzeuge, die auch diese Technologie aufweisen, Informationen über ihre benachbarten Fahrzeuge erhalten.

Eine weitere vorteilhafte Ausgestaltungsform zeichnet sich dadurch aus, dass es sich bei der Sendeeinheit um einen Funkschlüssel des Fahrzeugs oder einen fahrzeugseitigen Sender/Empfänger handelt und das empfangene Ortungssignals über ein Zeitintervall aufgezeichnet wird.

In einer weiteren vorteilhaften Ausgestaltungsform wird durch eine Positionserfassungseinheit zur Erfassung einer Position des Fahrzeugs, das Ortungssignal auf der erfassten Position basierend generiert.

Eine weitere vorteilhafte Ausgestaltungsform ist dadurch gekennzeichnet, dass die Notrufempfangseinheit des Ortungssignals in regelmäßigen zeitlichen Abständen übermittelt.

Eine weitere vorteilhafte Ausgestaltungsform ist dadurch gekennzeichnet, dass die Sendeeinheit zur Übermittlung des Ortungssignals auf Basis von WLAN 802.11p Standard, WLAN 802.11 a/b/g/n Standard, WiMax Standard, Bluetooth Standard, IEEE 802.15.4 Standard, ZigBee Standard oder einem zellularen Funkstandard ausgeführt ist.

Eine besonders vorteilhafte Ausführungsform zeichnet sich dadurch aus, dass sowohl ein Unfall des Fahrzeugs als auch ein von dem Fahrzeug bereits abgesetzter elektronischer Notruf (Ecall)von der Notrufempfangseinheit als Triggerereignis gewertet werden.

In einer weiteren vorteilhaften Ausgestaltungsform der Notrufempfangseinheit ist diese in der Form ausgeführt, dass sie zum Empfang eines Suchsignals, das von dem Empfänger übermittelt wird, wobei das Suchsignal von der Notrufempfangseinheit als Triggerereignis gewertet wird, geeignet ist.

Eine weitere vorteilhafte Ausgestaltungsform der Notrufempfangseinheit zeichnet sich dadurch aus, dass das Suchsignal von der Notrufempfangseinheit nur dann als Triggerereignis gewertet wird, wenn zuvor ein Unfall des Fahrzeugs oder das Absetzen eines elektronischen Notrufs detektiert wurde.

Besonders vorteilhaft ist erfindungsgemäße Notrufempfangseinheit dadurch, dass die Notrufempfangseinheit zum parallelen Übermitteln des Ortungssignals auf mehreren Übertragungswegen aufgebaut ist.

Eine weitere vorteilhafte Ausführungsform ist dadurch gekennzeichnet, dass die Steuereinheit neben dem Ortungssignal weitere Daten an die Sendeinheit zum Übermitteln weitergibt. Eine weitere vorteilhafte Ausführungsform ist dadurch gekennzeichnet, dass die Sendeeinheit zum Übermitteln des Ortungssignals und weiterer Informationen an benachbarte Fahrzeuge ausgeführt ist.

Eine weitere Ausführungsform der Notrufempfangseinheit ist zum Empfang eines Steuersignals ausgeführt, das von dem Empfänger übermittelt wird, wobei das empfangene Steuersignal zur Steuerung einer Funktion einer Systemkomponente des Fahrzeugs ausgeführt ist und durch die Notrufempfangseinheit aktiviert werden kann.

Eine weitere besonders vorteilhafte Ausführungsform der Notrufempfangseinheit zeichnet sich dadurch aus, dass ein von der Notrufempfangseinheit empfangenes Meldesignal, welches mit einem gemeldeten Diebstahl des Fahrzeugs zusammenhängt, von der Notrufempfangseinheit als Triggerereignis gewertet wird.

Besonders vorteilhaft ist ein Fahrzeug das mit der erfindungsgemäßen Notrufempfangseinheit ausgestattet ist, da hierdurch z.B. Rettungsfahrzeuge immer diese Notrufempfangseinheit bei Einsätzen bereithalten können.

Nach einem Unfall sendet ein Fahrzeug ein Ortungssignal aus. Um nun den suchenden Einsatzkräften das Finden des Fahrzeugs zu erleichtern, fordern diese über ihren Empfänger das Auto dazu auf, zu Hupen oder die Lichter (Front- und Heckscheinwerfer, Blinker, Innenraumbeleuchtung, ...) einzuschalten. Um Missbrauch zu vermeiden wird diese Funktion durch das Fahrzeug jedoch nur frei geschaltet, wenn bereits ein Ortungssignal ausgesendet wird. Es wird somit über die Notrufempfangseinheit bei Erkennung eines Unfalls über eine mobile Kommunikationsverbindung Zugang zu den im Fahrzeug befindlichen Systemen und Komponenten gewährt. Hierzu erfolgt im Fahrzeug eine Erkennung, dass die Notrufempfangseinheit das verunglückte Fahrzeug kontaktiert und über eine sichere Identitätsinformation der Notrufempfangseinheit ein Zugriff mittels des CAN-Busses oder einer anderen Kommunikationsverbindung auf die Fahrzeugkomponenten erhält. Die Identitätsinformation der Notrufempfangseinheit wird über eine autorisierte Zentrale vergeben. Gemäss der Erfindung können die Notrufempfangseinheit Fahrerassistenz und Fahrzeugsicherheitssystem, bei entsprechender Berechtigung, direkt angesprochen werden. Als Fahrzeugsicherheitssystemen sind alle im Fahrzeug verfügbaren Bremssysteme mit elektronischer Regelung einsetzbar. Fahrzeugsicherheitssysteme können das Electronic Break System (EBS), das Engine Management System (EMS), Antiblockiersystem, Antriebs-Schlupf-Regelung, Elektronisches Stabilitätsprogramm, Elektronische Differentialsperre, Transmission Control Unit (TCU), Elektronische Bremskraftverteilung (EBV) und/oder Motor-Schleppmomenten-Regelung (MSR), elektrisch ansteuerbare Lenkungen (ASF, EPS) sein.

Fahrerassistenzsysteme sind elektronische Zusatzeinrichtungen in Fahrzeugen zur Unterstützung des Fahrers in bestimmten Fahrsituationen. Hierbei stehen oft Sicherheitsaspekte, aber auch die Steigerung des Fahrkomforts im Vordergrund. Diese Systeme greifen teilautonom oder autonom in Antrieb, Steuerung (z.B. Gas, Bremse, Lenkung) oder Signalisierungseinrichtungen des Fahrzeuges ein oder warnen durch geeignete Mensch-Maschine-Schnittstellen den Fahrer kurz vor oder während kritischer Situationen. Solche Fahrassistenzsysteme sind beispielsweise Einparkhilfe (Sensorarrays zur Hindernis- und Abstandserkennung), Bremsassistent (BAS), Tempomat, Adaptive Cruise Control oder Abstandsregeltempomat (ACC), Abstandswarner, Abbiegeassistent, Stauassistent, Spurerkennungssystem, Spurhalteassistent/Spurassistent (Querführungsunterstützung, lane departure warning (LDW)), Spurhalteunterstützung (lane keeping support)), Spurwechselassistent (lane change assistance), Spurwechselunterstützung (lane change support), Intelligent Speed Adaption (ISA), Adaptives Kurvenlicht, Reifendruckkontrollsystem, Fahrerzustandserkennung, Verkehrszeichenerkennung, Platooning, Automatische Notbremsung (ANB), Auf- und Abblendassistent für das Fahrlicht, Nachtsichtsystem (Night Vision).

Es ist erfindungsgemäß angedacht einmalige Ortungshilfen, wie z. B. Leuchtraketen, etc. auf diese Weise zu aktivieren. Hierzu muss jedoch sichergestellt werden, dass diese Ortungshilfen nicht versehentlich aktiviert werden können und nur dann aktivierbar sind, wenn sie keine Gefahr darstellen.

Beispielhaft können Einsatzkräfte über die Notrufempfangseinheit den Status der Airbags abfragen und ggf. die Airbags deaktivieren oder notfalls auch auslösen, um Gefahren bei der Bergung für das Rettungspersonal durch unkontrolliert auslösende Airbags auszuschließen.

Ebenfalls ist es möglich, den Status von Batterien und Fahrzeugtanks abzufragen. So kann festgestellt werden, ob diese auslaufen, falls der Tankfüllstand nicht konstant bleibt oder ob es irgendwo am Fahrzeug Kurzschlüsse z.B. mit der Karosserie gibt. Weiterhin kann der Zustand der Batterien überprüft werden, damit festgestellt werden kann, ob die elektrischen und elektronischen Systeme im Fahrzeug durch die Energieversorgung über die Batterie sich in Funktion befinden oder komplett ausgefallen sind. Daraufhin können entsprechende Vorsichtsmaßnahmen durch die Rettungskräfte einleitet werden.

Um diese Funktionen einsetzen zu können, schlägt die vorliegende Erfindung weitergehend vor, die Rettungskräfte mit einer besonderen Form einer Notrufempfangseinheit in einer in der Gestalt eines so genannten Displayschlüssels auszubilden. Diese Notrufempfangseinheit in Form eines Displayschlüssels zeigt auf seinem Display die Informationen für die Retter an, wie z. B. die Nummer des zu verwendenden Rettungsleitfadens, die Empfangsfeldstärke für das Rettungssignal, den Received Signal Strength Indication (RSSI) für das Rettungssignal, die Farbe des Fahrzeugs, den Typ des Fahrzeugs oder die Anzahl der Passagiere.

Der Displayschlüssel besteht aus einem Display das in einer RKE Eingabeeinheit integriert ist. Das Display aus einer unstrukturierten, ebenen zweidimensionalen Sensorfläche, die auf einem elektromechanischen Wandler, vorteilhafterweise einem Schwingungserzeuger angeordnet und mit diesem fest verbunden, z. B. aufgeklebt, ist. Der Schwingungserzeuger weist einen die Sensorfläche aufnehmenden Teller auf, wodurch die vom Schwingungserzeuger erzeugten Frequenzen und/oder Amplituden auf die Sensorfläche übertragen werden. Der Schwingungserzeuger ist so aufgebaut, dass sein Teller auch vertikale Bewegungen ausführen kann.

Die hochauflösende Eingabefläche weist eine handgerechte Bemaßung auf. Die Auflösung beträgt annähernd 200x200 oder mehr Sensorelemente.

Berührt ein Benutzer mit der Hand die Sensorfläche, so wird mit Hilfe der kapazitiv arbeitenden Sensorfläche festgestellt, an welcher Stelle der Sensorfläche die Berührung erfolgte.

Die kapazitiv arbeitende Sensorfläche ist über eine Eingabe/Ausgabe-Einheit mit einem Mikrocontroller verbunden, welcher das Positionssignal von der Sensorfläche auswertet. Dazu weist der Mikrocontroller einen Datenspeicher auf, in welchem in Abhängigkeit der Koordinaten der Sensorfläche Frequenzen und/oder Amplituden und Höhenänderungen gespeichert sind. Diese Zuordnung der Frequenzen und/oder Amplituden und Höhenänderungen zum Koordinatensystem entspricht einer aktuellen Bedienungsfunktion, die als Menu auf einer Anzeigeeinrichtung dem Benutzer visuell angezeigt wird. Dieses Menu wird von einem übergeordneten Informationssystem der RKE bereitgestellt, welches ebenfalls mit dem Mikrocontroller verbunden ist. Die detektierte Position wird vom Mikrocontroller zur Steuerung einer komplexen Bedienfunktion an das Informationssystem der RKE Einheit weitergegeben.

Der Mikrocontroller erzeugt koordinatenorientiert nach einem beliebig gestalteten und über die Fläche gelegten virtuellen Referenzmuster eine Schwingungsanregung der Eingabefläche, in dem eine der Position des Rettungspersonals auf der Sensorfläche entsprechende Frequenz von dem Mikrocontroller über einen D/A-Wandler und einen Verstärker an den Schwingungserzeuger ausgegeben wird.

Die Eingabefläche besteht aus beispielsweise drei virtuellen Schaltflächen, die einer angezeigten Menüstruktur entsprechen. Die Menüstruktur kann bspw. den Positionen der verunglückten Fahrzeuge entsprechen. Im Speicher des Mikrocontrollers sind diese drei Schaltflächen verschiedenen Frequenzen zugeordnet. Berührt der Nutzer die Teile der Eingabefläche, welche der Funktion "Zielführung" entsprechen und die als erste Schaltfläche abgespeichert sind, so schwingt die gesamte Eingabefläche mit Frequenz, Analog schwingt die gesamte Eingabefläche mit den Frequenzen f2 bzw. f3, wenn die Eingabefläche an den Positionen der verunglückten Fahrzeuge 2 und 3 berührt werden. Beim Überstreichen der Eingabefläche gewinnt der Benutzer somit den taktilen Eindruck von Schaltern. Es sei noch einmal festgestellt, dass diese drei Schaltflächen als Repräsentant der verunglückten Fahrzeuge nicht wirklich auf der Eingabefläche existieren, sondern nur ein Eindruck der Existenz durch die Bewegung der Eingabefläche erzeugt wird. Dadurch wird eine Blindbedienbarkeit von Funktionen optimal unterstützt. Die Blindbedienbarkeit ist eine zentrale Voraussetzung für die Bedienung von Informationssystemen für die Rettungskräfte, um die Interaktion mit einem Informationssystem des RKE so effizient wie möglich zu halten und auch in zeitlichen kritischen Situationen einem potentiellen Retter eine zielgenaue Ortangabe zu einem oder mehrehren verunglückten Fahrzeugen zu geben.

Entscheidend ist, dass die gesamte Eingabefläche jeweils mit der der Position der verunglückten Fahrzeuge entsprechenden Frequenz vibriert. Das virtuelle Referenzmuster ist per Software frei definierbar.

Um einen Eingabebefehl zu erzeugen, ist ein linearer Drucksensor an der Sensorfläche abgewandte Seite des Tellers des Schwingungserzeugers angeordnet. Es können aber auch mehrere Drucksensoren unter der Sensorfläche verteilt sein.

Entscheidet sich der Rettungshelfer für eine andere Menüfläche, so drückt er beim Auftreten der Frequenz f1 auf eine zugeordnete Sensorfläche und der Drucksensor überträgt diese Information an das Informationssystem der RKE. Aufgrund dieses Eingabebefehls ändert das Informationssystem das aktuelle Bedienungsmenü, indem er auf der Anzeige ein anderes Bild anzeigt. Weiterhin meldet das Informationssystem dem Mikrocontroller, dass dieser aus seinem Speicher das virtuelle Referenzmuster bereitstellen soll, welches der neuen Bedienungsaufgabe entspricht.

Beispielsweise kann ein Unfalllageplan mit markanten Punkten und verunglückten Fahrzeugen dargestellt, wobei die Eingabefläche immer dann, wenn die Position des Eingabeorgans einem der entsprechenden Punkte entspricht je nach Position mit der ersten, zweiten bzw. dritten usw. Frequenz schwingt.

Mit Hilfe dieser einfachen softwaregesteuerten Gestaltung ist es möglich, ein einfaches, insbesondere anwendbares Notrufempfangseinheit herzustellen.

Vor allem für sich ändernde Werte, wie die Empfangsfeldstärke, ist es angedacht, diese auch grafisch über die Zeit aufzutragen. Damit fällt es vorteilhaft leichter, den Unfallwagen anzupeilen bzw. aufzufinden.

Befinden sich mehrere verunfallte Fahrzeuge in der Empfangsreichweite, ist es angedacht durch den Displayschlüssel für die Fahrzeuge, dessen Informationen angezeigt werden sollen, auszuwählen. Zusätzlich kann eingeblendet werden, wie viele zusätzliche verunfallte Fahrzeuge sich noch in der Umgebung befinden, damit die Rettungskräfte den Überblick bewahren können. Somit fungiert der Displayschlüssel wie eine echtzeitfähige digitale Karte, die eine Situationsanalyse des Unfallortes mit den beteiligten Fahrzeugen bereitstellt. Idealerweise werden hierfür mehrere "Suchschlüssel" über Funksignale gekoppelt, so dass angezeigt werden kann, falls eines der Unfallfahrzeuge noch von niemandem gesucht wird.

Abhängig von dem Received Signal Strength Indication (RSSI) stellt die Notrufempfangseinheit einen Indikator für die Empfangsfeldstärke bereit. Dieser Indikator wird dazu herangezogen, um einen für die Kommunikation brauchbaren bzw. nutzbaren zu finden. Falls die Signalstärke, die für eine erfolgreiche Kommunikation benötigt wird, auf dem aktuell genutzten Kanal unterschritten wird, kann mit Hilfe des RSSI-Wertes gegebenenfalls auf einen besseren Kanal gewechselt werden.

Hat das Fahrzeug Funktionen freigeschaltet, wie z. B. "Licht an" oder "Hupen", so werden diese Funktionen über Tasten des Schlüssels bereitgestellt. Weitere mögliche Funktionen für die Tasten sind das Umschalten, was angezeigt wird, Aktualisierung des angezeigten RSSI bzw. der angezeigten Empfangsfeldstärke, Signalisierung an andere Einsatzkräfte, dass das angepeilte Fahrzeug gefunden wurde in Kombination mit der Kennung des Fahrzeugs, damit ersichtlich ist, welche Fahrzeuge noch nicht aufgefunden wurden, sowie Abfrage von Fahrzeugdaten.

Idealerweise ist die Anzeige des "Suchschlüssels" mit einer Hintergrundbeleuchtung ausgestattet und wasserdicht, damit er von den Einsatzkräften auch bei schlechten Sichtbedingungen und schlechtem Wetter gut verwendet werden kann. Auch die Tasten sind beleuchtet und so groß, dass sie auch mit Handschuhen bedient werden können.

Durch die Verwendung einer Sonderform eines Schlüssels (RKE) können Synergien zum herkömmlichen Fahrzeugschlüssel genutzt werden und somit die Kosten für die Ausrüstung der Einsatzkräfte gering gehalten werden und es ist keine zusätzliche Hardware für die beschriebene Funktionalität notwendig.

### Beschreibung von Ausführungsbeispielen

Ein Fahrzeug kommt von der Straße ab, überschlägt sich und bleibt im Gebüsch liegen. Per Ecall werden die Einsatzkräfte alarmiert und kommen an die Unfallstelle. Zusätzlich sendet das Fahrzeug ein Ortungssignal aus. Da die Rettungskräfte das Fahrzeug nicht sofort entdecken können, aktivieren sie über das Ortungsgerät Hupe und Licht des Fahrzeugs. Dadurch fällt das Fahrzeug im Gebüsch auf und die Fahrzeuginsassen können zeitnah geborgen werden.

Ein Fahrzeug wurde von Rettungskräften nach einem Unfall gefunden. Das Fahrzeug sendet weiterhin ein Ortungssignal aus. Die Einsatzkräfte fragen nun über diese Kommunikationsverbindung ab, ob die Airbags ausgelöst wurden und wie der Tankstand ist. Dabei stellen sie fest, dass der Tank langsam ausläuft und somit Brand- bzw. Explosionsgefahr besteht.

Die Feuerwehr wird zu einem Unfall an einer Kreuzung gerufen. Vor Ort wird festgestellt, dass die Kreuzung sehr groß ist und sich dort aber kein Unfall befindet. Daraufhin schwärmen die Fahrzeuge aus, um den Unfall zu finden. Nach einiger Zeit entdeckt Fahrzeug 1 den Unfall in einer Seitenstraße nahe der Kreuzung. Daraufhin sendet es per drahtloser Fahrberechtigung ein Signal aus, welches die anderen an der Suche beteiligten Fahrzeuge empfangen und sich daraufhin ebenfalls zur Unfallstelle begeben.

Ein Notruf geht per 112 bei der Rettungsleitstelle ein und die Einsatzkräfte werden ausgeschickt. An der übermittelten Position findet sich jedoch kein Unfall. Daraufhin schwärmen die Einsatzkräfte aus und suchen den Unfall. Nach einiger Zeit findet ein Suchtrupp eine Person im Wald etwas entfernt von der ursprünglichen Stelle. Der Suchtrupp sendet ein Signal per drahtloser Fahrberechtigung und zusätzlich per zellulären Funk, da sich nicht mehr alle Suchtrupps in Reichweite der drahtlosen Fahrberechtigung befinden. Das Signal enthält die Information, dass nur eine Person gefunden wurde. Die anderen Suchtrupps erkennen durch die Botschaft, wo sich ungefähr der Unfall ereignet haben muss und konzentrieren daraufhin ihre Suche auf den Bereich um die Fundstelle der Person.

## Patentansprüche

1. Notrufempfangseinheit für Einsatzkräfte, die Notrufempfangseinheit aufweisend:
- eine Detektionseinheit zur Detektion eines verunfallten Fahrzeuges, die Detektionseinheit ein Triggerereignis generiert,
- eine Steuereinheit zum Erzeugen eines Ortungssignals,
- eine Sendeeinheit zum mehrmaligen Übermitteln des Ortungssignals an einen Empfänger und das mehrmalige Übermitteln des Ortungssignals, das von dem Triggerereignis getriggert ist und dem Ortungssignal ein Auffinden des Fahrzeugs ermöglicht, abhängig von der Empfangsfeldstärke des Ortungssignals mit dem Auffinden mindestens eines verunfallten Fahrzeuges eine Nummer des Rettungsleitfadens des jeweiligen verunfallten Fahrzeuges und ein RSSI für das Rettungssignal empfangen werden,
**dadurch gekennzeichnet, dass** die Notrufempfangseinheit als Displayschlüssel ausgeführt ist und in einer RKE Eingabeeinheit der Einsatzkräfte integriert ist, wobei über die Notrufempfangseinheit Fahrerassistenz- und Fahrzeugsicherheitssysteme über die Steuereinheit angesprochen werden.

2. Notrufempfangseinheit nach Anspruch 1, **dadurch gekennzeichnet, dass** es sich bei der Sendeeinheit um einen Funkschlüssel des Fahrzeugs oder einen fahrzeugseitigen Sender/Empfänger handelt und das empfangene Ortungssignal über ein Zeitintervall aufgezeichnet wird.

3. Notrufempfangseinheit nach Anspruch 1 oder 2, **dadurch gekennzeichnet, dass** eine Positionserfassungseinheit zur Erfassung einer Position des Fahrzeugs vorliegt und das Ortungssignal auf der erfassten Position basiert.

4. Notrufempfangseinheit nach einem der vorhergehenden Ansprüche, **dadurch gekennzeichnet, dass** eine Übermittlung des Ortungssignals in regelmäßigen zeitlichen Abständen ausgeführt wird.

5. Notrufempfangseinheit nach einem der vorhergehenden Ansprüche, **dadurch gekennzeichnet, dass** die Sendeeinheit zur Übermittlung des Ortungssignals auf Basis von WLAN 802.11p Standard, WLAN 802.11 a/b/g/n Standard, WiMax Standard, Bluetooth Standard oder einem zellularen Funkstandard ausgeführt ist.

6. Notrufempfangseinheit nach einem der vorhergehenden Ansprüche, **dadurch gekennzeichnet, dass** sowohl ein Unfall des Fahrzeugs als auch ein von dem Fahrzeug bereits abgesetzter elektronischer Notruf (Ecall)von der Notrufempfangseinheit als Triggerereignis gewertet werden.

7. Notrufempfangseinheit nach einem der vorhergehenden Ansprüche, **dadurch gekennzeichnet, dass** die Notrufempfangseinheit ausgeführt ist zum Empfang eines Suchsignals, das von dem Empfänger übermittelt wird, wobei das Suchsignal von der Notrufempfangseinheit als Triggerereignis gewertet wird.

8. Notrufempfangseinheit nach Anspruch 7, **dadurch gekennzeichnet, dass** das Suchsignal von der Notrufempfangseinheit nur dann als Triggerereignis gewertet wird, wenn zuvor ein Unfall des Fahrzeugs oder das Absetzen eines elektronischen Notrufs detektiert wurde.

9. Notrufempfangseinheit nach einem der vorhergehenden Ansprüche, **dadurch** g**ekennzeichnet,** dass die Notrufempfangseinheit zum parallelen Übermitteln des Ortungssignals auf mehreren Übertragungswegen aufgebaut ist.

10. Notrufempfangseinheit nach einem der vorhergehenden Ansprüche, **dadurch gekennzeichnet, dass** die Steuereinheit neben dem Ortungssignal weitere Daten an die Sendeinheit zum Übermitteln weitergibt.

11. Notrufempfangseinheit nach einem der vorhergehenden Ansprüche, **dadurch gekennzeichnet, dass** die Sendeeinheit zum Übermitteln des Ortungssignals und weiterer Informationen an benachbarte Fahrzeuge ausgeführt ist.

12. Notrufempfangseinheit nach einem der vorhergehenden Ansprüche, ausgeführt zum Empfang eines Steuersignals, das von dem Empfänger übermittelt wird, wobei das empfangene Steuersignal zur Steuerung einer Funktion einer Systemkomponente des Fahrzeugs ausgeführt ist und durch die Notrufempfangseinheit aktiviert werden kann.

13. Notrufempfangseinheit nach einem der vorhergehenden Ansprüche, wobei ein von der Notrufempfangseinheit empfangenes Meldesignal, welches mit einem gemeldeten Diebstahl des Fahrzeugs zusammenhängt, von der Notrufempfangseinheit als Triggerereignis gewertet wird.

14. Fahrzeug mit einer Notrufempfangseinheit nach einem der Ansprüche 1 bis 13.

## Claims

1. Emergency call receiving unit for emergency services, the emergency call receiving unit comprising:
- a detection unit for detecting a vehicle which is involved in an accident, the detection unit generates a trigger event,
- a control unit for generating a locating signal,
- a transmitting unit for repeated transmission of the locating signal to a receiver and the repeated transmission of the locating signal which is triggered by the trigger event, and the locating signal permits the vehicle to be found, a number of the rescue guideline of the respective vehicle involved in an accident and an RSSI for the rescue signal are received as a function of the reception field strength of the locating signal when the at least one vehicle involved in an accident is found,
- **characterized in that** the emergency call receiving unit is configured as a display key and integrated into an RKE input unit, wherein driver assistance and vehicle safety systems are addressed via the emergency call receiving unit by the way of the control unit.

2. Emergency call receiving unit according to Claim 1, **characterized in that** the transmitting unit is a radio key of the vehicle or a vehicle-mounted transceiver, and the received locating signal is recorded over a time interval.

3. Emergency call receiving unit according to Claim 1 or 2, **characterized in that** a position detection unit for detecting a position of the vehicle is present and the locating signal is based on the detected position.

4. Emergency call receiving unit according to one of the preceding claims, **characterized in that** the locating signal is transmitted at regular time intervals.

5. Emergency call receiving unit according to one of the preceding claims, **characterized in that** the transmitting unit is designed to transmit the locating signal on the basis of the WLAN 802.11p Standard, WLAN 802.11 a/b/g/n Standard, WiMax Standard, Bluetooth Standard or a cellular radio standard.

6. Emergency call receiving unit according to one of the preceding claims, **characterized in that** both an accident of the vehicle and an electronic emergency call (eCall), which has already been output by the vehicle, are evaluated as a trigger event by the emergency call receiving unit.

7. Emergency call receiving unit according to one of the preceding claims, **characterized in that** the emergency call receiving unit is designed to receive a search signal which is transmitted by the receiver, wherein the search signal is evaluated as a trigger event by the emergency call receiving unit.

8. Emergency call receiving unit according to Claim 7, **characterized in that** the search signal is evaluated as a trigger event by the emergency call receiving unit only if an accident of the vehicle or the outputting of an electronic emergency call has previously been detected.

9. Emergency call receiving unit according to one of the preceding claims, **characterized in that** the emergency call receiving unit is designed to carry out parallel transmission of the locating signal on a plurality of transmission paths.

10. Emergency call receiving unit according to one of the preceding claims, **characterized in that** the control unit passes on not only the locating signal but also other data to the transmitting unit for transmission.

11. Emergency call receiving unit according to one of the preceding claims, **characterized in that** the transmitting unit is designed to transmit the locating signal and further information to adjacent vehicles.

12. Emergency call receiving unit according to one of the preceding claims, designed for receiving a control signal which is transmitted by the receiver, and the received control signal being designed to control a function of a system component of the vehicle and being able to be activated by the emergency call receiving unit.

13. Emergency call receiving unit according to one of the preceding claims, wherein a communication signal which is received by the emergency call receiving unit and which is associated with a reported theft of the vehicle is evaluated as a trigger event by the emergency call receiving unit.

14. Vehicle having an emergency call receiving unit according to one of Claims 1 to 13.

## Revendications

1. Unité de réception d'appel de secours destinée à des forces d'intervention, l'unité de réception d'appel de secours comprenant :
- une unité de détection pour la détection d'un véhicule en détresse, l'unité de détection générant un événement de déclenchement,
- une unité de commande destinée à générer un signal de localisation,
- une unité d'émission destinée à transmettre plusieurs fois le signal de localisation à un récepteur, la transmission effectuée plusieurs fois du signal de localisation, qui est déclenchée par l'événement de déclenchement et qui permet au signal de localisation de localiser le véhicule, conduisant à la réception d'un numéro du manuel de sauvetage du véhicule en détresse respectif et d'une indication d'intensité du signal reçu (RSSI) pour le signal de sauvetage en fonction de l'intensité du champ de réception du signal de localisation lors de la recherche d'au moins un véhicule en détresse, **caractérisé en ce que** l'unité de réception d'appel de secours est réalisée sous la forme d'une clé d'affichage et est intégrée à une unité de saisie RKE des forces d'intervention, dans lequel, au moyen de l'unité de réception d'appel de secours, des systèmes d'assistance au conducteur et de sécurité du véhicule sont activés par l'intermédiaire de l'unité de commande.

2. Unité de réception d'appel de secours selon la revendication 1, **caractérisée en ce que** l'unité d'émission est une clé radio du véhicule ou un émetteur/récepteur côté véhicule et **en ce que** le signal de localisation reçu est enregistré au cours d'un intervalle de temps.

3. Unité de réception d'appel de secours selon la revendication 1 ou 2, **caractérisée en ce qu'**il est prévu une unité de détection de position destinée à détecter une position du véhicule et **en ce que** le signal de localisation est basé sur la position détectée.

4. Unité de réception d'appel de secours selon l'une quelconque des revendications précédentes, **caractérisée en ce qu'**une transmission du signal de localisation est effectuée à des intervalles de temps réguliers.

5. Unité de réception d'appel de secours selon l'une quelconque des revendications précédentes, **caractérisée en ce que** l'unité d'émission est réalisée de manière à transmettre le signal de localisation sur la base de la norme WLAN 802.11p, de la norme WLAN 802.11 a/b/g/n, de la norme WiMax, de la norme Bluetooth ou d'une norme radio cellulaire.

6. Unité de réception d'appel de secours selon l'une quelconque des revendications précédentes, **caractérisée en ce qu'**un accident du véhicule ainsi qu'un appel de secours électronique déjà interrompu par le véhicule (Ecall) sont évalués en tant qu'événement de déclenchement par l'unité de réception d'appel de secours.

7. Unité de réception d'appel de secours selon l'une quelconque des revendications précédentes, **caractérisée en ce que** l'unité de réception d'appel de secours est conçue pour recevoir un signal de recherche ayant été transmis par le récepteur, dans lequel le signal de recherche est évalué par l'unité de réception d'appel de secours comme étant un événement de déclenchement.

8. Unité de réception d'appel de secours selon la revendication 7, **caractérisée en ce que** le signal de recherche n'est évalué par l'unité de réception d'appel de secours comme étant un événement de déclenchement que lorsqu'un accident affectant le véhicule ou une interruption d'un appel de secours électronique a précédemment été détecté.

9. Unité de réception d'appel de secours selon l'une quelconque des revendications précédentes, **caractérisée en ce que** l'unité de réception d'appel de secours est conçue pour transmettre en parallèle le signal de localisation sur plusieurs trajets de transmission.

10. Unité de réception d'appel de secours selon l'une quelconque des revendications précédentes, **caractérisée en ce que** l'unité de commande, outre le signal de localisation, transfère d'autres données à l'unité d'émission afin de les transmettre.

11. Unité de réception d'appel de secours selon l'une quelconque des revendications précédentes, **caractérisée en ce que** l'unité d'émission est conçue pour transmettre à des véhicules avoisinants le signal de localisation et d'autres informations.

12. Unité de réception d'appel de secours selon l'une quelconque des revendications précédentes, conçue pour recevoir un signal de commande qui est transmis par le récepteur, dans lequel le signal de commande reçu est conçu pour commander une fonction d'un composant d'un système du véhicule et peut être activé par l'unité de réception d'appel de secours.

13. Unité de réception d'appel de secours selon l'une quelconque des revendications précédentes, dans lequel un signal d'avertissement, qui est associé à un vol signalé du véhicule, est évalué comme étant un événement de déclenchement par l'unité de réception d'appel de secours.

14. Véhicule comportant une unité de réception d'appel de secours selon l'une quelconque des revendications 1 à 13.
